Europäisches Patentamt

European Patent Office

Office européen des brevets

(19)

(11) Veröffentlichungsnummer: **0 148 413**
**B1**

(12) **EUROPÄISCHE PATENTSCHRIFT**

(45) Veröffentlichungstag der Patentschrift:
**22.06.88**

(21) Anmeldenummer: **84114747.3**

(22) Anmeldetag: **04.12.84**

(51) Int. Cl.⁴: **G 11 B 20/10**, G 11 B 20/14,
H 04 L 25/49, G 11 B 5/09

(54) Verfahren und Vorrichtung zur Wiedergabe von digitalisierten Signalen, die als binäre Signale in Form von Pulsen übertragen werden.

(30) Priorität: **19.12.83 CH 6741/83**
**03.07.84 CH 3196/84**

(43) Veröffentlichungstag der Anmeldung:
**17.07.85 Patentblatt 85/29**

(45) Bekanntmachung des Hinweises auf die Patenterteilung:
**22.06.88 Patentblatt 88/25**

(84) Benannte Vertragsstaaten:
**AT BE CH DE FR GB IT LI NL SE**

(56) Entgegenhaltungen:
**DE - A - 3 042 761**
**US - A - 4 000 513**

**FREQUENZ, Band 31, Nr. 9, 1977, Seiten 275-284,
BERLIN, (DE). F. JENIK et al.: "Neuere
Codierungsverfahren für Magnetschichtspeicher".**

(73) Patentinhaber: **WILLI STUDER AG Fabrik für
elektronische Apparate, Althardstrasse 30,
CH-8105 Regensdorf ZH (CH)**

(72) Erfinder: **Piot, Julien, 57 Grand'Rue, CH-1180 Rolle VD
(CH)**
Erfinder: **Lagadec, Roger Dr., Schulstrasse 22,
CH-8153 Rümlang ZH (CH)**

## Beschreibung

Die Erfindung betrifft ein Verfahren und eine Vorrichtung zur Wiedergabe von digitalisierten Signalen, die als binäre Signale in Form von Pulsen übertragen werden.

Es ist bekannt bei der Aufzeichnung digitalisierter Signale auf einem Aufzeichnungsträger, beispielsweise auf ein Magnetband, eine Magnetplatte, eine Bildplatte usw. einen Code zu benützen. Ein solcher Code hat zum Ziel, die grössten Abstände zwischen zwei Pulsen des aufgezeichneten Signalverlaufes zu verringern und die kürzesten Abstände im geringem Masse zu verlängern. Dies um den Raum den eine Signalfolge auf einem Aufzeichnungsträger beansprucht, zu verringern.

Als Codes in diesem Sinne stehen sogenannte Lauflängscodes (run-length codes) zur Verfügung. Ein solcher, HDM-1 genannter, derartiger Code sieht Lauflängen oder Signalabstände vor, die in Schritten von 0,5T zwischen 1,5T und 4,5T variieren können. Als T wird dabei die Zeit oder entsprechend die Länge bezeichnet, die zur Aufzeichnung eines einzelnen Bit erfordert wird.

Die Wiedergabe der Daten oder Signale von einem Aufzeichnungsträger über die verschiedenen Elemente einer Wiedergabeelektronik erfolgt meistens nicht in idealer Weise. Beispielsweise weist die Flanke einer Schrittantwort eine endliche, statt eine unendliche Steilheit auf und die Phasenantwort hängt nicht gemäss einer linearen Charakteristik von der Frequenz der Signale ab. Aus diesem Grunde werden meistens Entzerrer (equalizers) verwendet, welche das Verhalten der Wiedergabeelektronik bei einer Schritt- und/oder Phasenantwort ausgleichen, d.h. verbessern und dem idealen Verhalten angleichen sollen. Solche Entzerrer behandeln die eintreffenden Signale als Analogsignale und sind im Prinzip analoge Filter die genau an die Parameter des Aufnahmesystems (wie z.B. Bandgeschwindigkeit, Aufnahmekopfeigenschaften, Bandeigenschaften usw.) angepasst sind.

In einer typischen bekannten Wiedergabeelektronik folgt auf den Entzerrer jeweils eine Messeinrichtung zur Messung der Abstände aufeinanderfolgender Signale (Schrittantworten oder Nulldurchgängen des Signals) sowie eine Schaltung zur Quantisierung der gemessenen Signalabstände.

Der Nachteil dieser bekannten Schaltungen besteht im wesentlichen darin, dass solche Entzerrer kompliziert im Aufbau sind und aus einer grossen Zahl elektronischer Bauteile bestehen. Dies führt dazu, dass solche Entzerrer auf bestimmte Parameter eingestellt sind. Diese Einstellung ist aufwendig. Ändern einmal ein- oder mehrere Parameter so muss die Einstellung neu durchgeführt werden. Es können auch mehrere Entzerrer die auf verschiedene Werte eines oder mehrerer Parameter eingestellt sind, vorgesehen und parallel geschaltet werden. Eine solche Lösung ist aber in den Wiedergabegeräten kaum anwendbar, da sie teuer ist und zuviel Raum im Gerät beansprucht.

Die Erfindung wie sie in den Ansprüchen gekennzeichnet ist, löst die Aufgabe, ein Verfahren und eine Vorrichtung zu schaffen, die die Übertragungsfehler eines nicht idealen Systems zur Übertragung von digitalen Signalen mit geringerem Aufwand korrigieren lässt und die sich auch im Falle einer Rückgewinnung von Signalen ab einem bewegten Träger (Band, Platte) grösseren Änderungen der relativen Geschwindigkeit zwischen Träger und Lesevorrichtung einfach anpassen kann.

Die durch die Erfindung erreichten Vorteile sind im wesentlichen darin zu sehen, dass zwei bisher voneinander getrennte Verarbeitungen, nämlich das Entzerren und das Wiederherstellen der ursprünglichen, quantisierten Signalabstände in derselben Schaltung erfolgen können. Insbesondere kann die Verarbeitung der digitalen Signale nun auch durchgehend auf digitale Weise erfolgen. Analog arbeitende Komponenten fallen weg. Dies ergibt einfache und raumsparende Schaltungen.

Als weiterer Vorteil ist die problemlose Anpassung einer Wiedergabeelektronik an Änderungen der Geschwindigkeit des Trägers anzusehen.

Die vorgeschlagene einfache Art der Signalverarbeitung führt zu niedrigeren Verarbeitungsgeschwindigkeiten in den Schaltkreisen. Dies erhöht die Funktionssicherheit bei starker Belastung der Vorrichtung. Dies wirkt sich besonders dann positiv aus, wenn die Signale innerhalb einer Wiedergabeelektronik im Zeit-Multiplexverfahren verarbeitet werden.

Ein weiterer, durch die Erfindung erreichter Vorteil besteht darin, dass die Vorrichtung dadurch eingestellt werden kann, dass man bekannte Signale mit bekannten Signalabständen in ein an die Vorrichtung angeschlossenes, Aufnahme- und Wiedergabegeräte eingeben und am Ausgang des Wiedergabeteiles wieder abnehmen und mit den eingegebenen Signalen vergleichen kann. Aus diesen Vergleichen ergeben sich direkt Werte, die in die Vorrichtung eingegeben werden können. Wird dieser Vorgang automatisiert, so kann sich die erfindungsgemässe Vorrichtung selbst einstellen.

Im folgenden wird die Erfindung anhand von lediglich einen Ausführungsweg darstellenden Zeichnungen näher erläutert. Es zeigen:

Figur 1 ein digitaler Signalverlauf

Figur 2 ein codierter digitaler Signalverlauf

Figur 3, 4 und 5 je ein verzerrter codierter digitaler Signalverlauf

Figur 6 ein Teil einer Vorrichtung zur Wiedergabe aufgezeichneter Signale

Figur 7 eine Vorrichtung entsprechend Figur 6

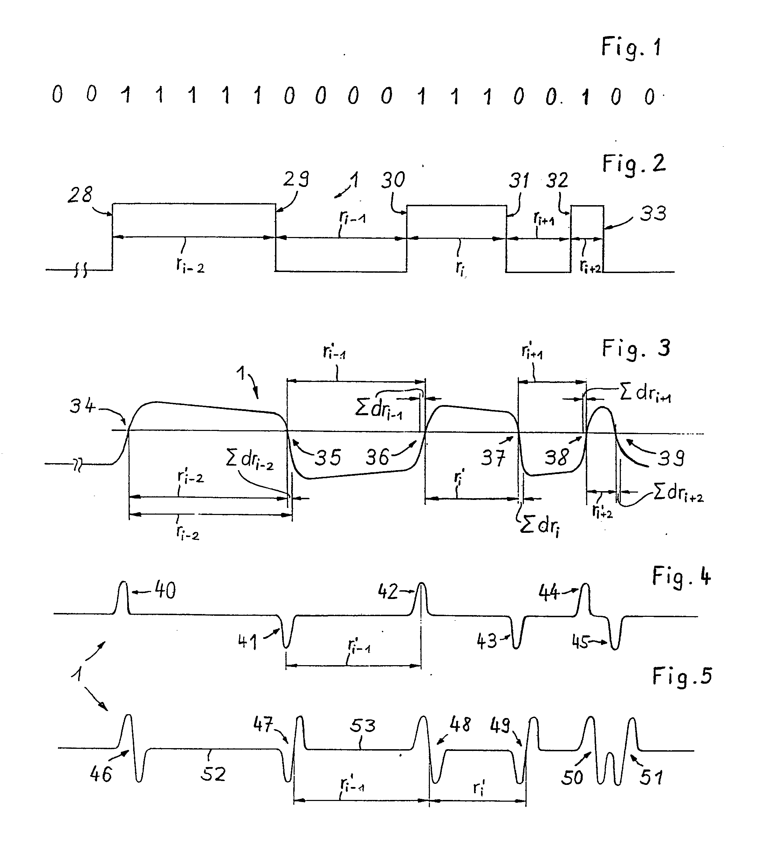

Figur 1 zeigt einen Signalverlauf in an sich bekannter digitaler Form.

Figur 2 zeigt denselben Signalverlauf 1 wie in Figur 1 aber ausgedrückt durch eine Folge von Signalen 28 bis 33, die mehrere aufeinanderfolgende Pulse mit Signalabständen oder Lauflängen $r_{i-2}$, $r_{i-1}$, $r_i$, $r_{i+1}$, $r_{i+2}$ definieren. Solche Signalabstände sind proportional zur Anzahl gleicher Bit 0 oder 1, die einander folgen gemäss der Darstellung in Figur 1.

Figur 3 zeigt einen Signalverlauf, der dem Signalverlauf 1 gemäss Figur 2 näherungsweise entspricht. Er besteht aus Signalen 34 bis 39, die Signalabstände oder Lauflängen $r'_i$, $r'_{i-1}$, $r'_{i-2}$, $r'_{i+1}$, $r'_{i+2}$ definieren. Diese weichen von den Signalabständen $r_i$, $r_{i-1}$, $r_{i-2}$, $r_{i+1}$, $r_{i+2}$ um Signalabweichungen $dr_i$, $dr_{i-1}$, $dr_{i-2}$, $dr_{i+1}$, $dr_{i+2}$ ab.

In Figur 4 sind die Signalabstände durch Signale 40 bis 45 bestimmt. Solche Signale 40 bis 45 sind beispielsweise als Signalantworten auf Signale wie 28 bis 33 zu verstehen. Beispielsweise treten solche Signale 40 bis 45 am Ausgang eines Wiedergabekopfes auf.

Im Gegensatz zu den Signalen 34 bis 39 gemäss Fig. 3, welche durch Integration der Signale 40 bis 45 aus Figur 4 entstehen, ergeben sich Signale 46 bis 51 in Figur 5 durch Differentiation der Signale 40 bis 45 aus Figur 4.

Aus den Figuren 2 bis 5 lassen sich Lauflängen oder Signalabstände $r_i$, $r_{i\mp n,m}$, $r'_i$ und $r'_{i\mp n,m}$ erkennen. Als Lauflänge ist dabei der Abstand oder die Zeitdauer zwischen zwei aufeinanderfolgenden Signalen zu verstehen. Als Signal kann ein Schrittförmiges Signal 28, 29 als Übergang zwischen zwei stabilen Niveaus wie aus Fig. 2 bekannt, verstanden werden.

Ein Signal 40, wie aus Fig. 4 bekannt, das sofort in eine ursprüngliche Lage zurückkehrt ist ebenso denkbar. In einem solchen Fall wird als Signalabstand der Abstand zwischen vergleichbaren Punkten des Signals, z.B. zwischen Maxima und Minima verstanden. Am häufigsten wird als Signal aber der Nulldurchgang oder der Durchgang eines sich ändernden Signallaufs durch ein vorbestimmtes Niveau verstanden. Dies trifft bei den Figuren 3 und 5 zu. Die Signale 28 bis 33 usw. des Signalverlaufes 1 gemäss Figur 2 können als Ausgangssignale, die Signale 34 bis 51 gemäss den Figuren 3, 4 und 5 können als Eingangssignale bezeichnet werden. Dies in bezug auf die Vorrichtung in der diese verarbeitet werden sollen. Dabei sind die Signalabstände so zu verstehen, dass Abschnitte 52 oder 53 (Fig. 5) eines Signalverlaufes nicht als Durchgänge oder Null-Durchgänge im obenerwähnten Sinne gelten. Dies ergäbe auch eine sehr schlechte Begrenzung der Lauflänge.

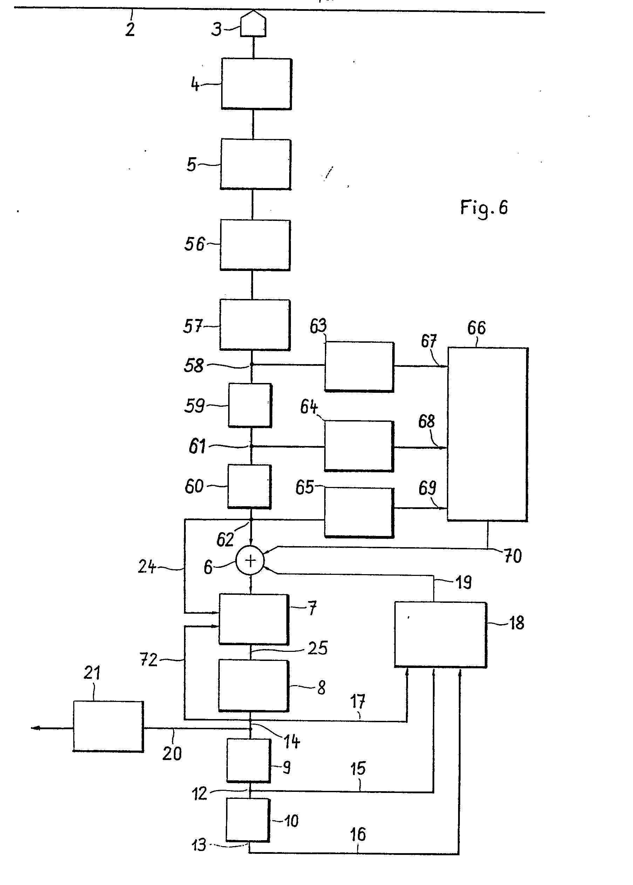

Figur 6 zeigt einen Teil einer Vorrichtung zur Wiedergabe von digitalisierten Daten oder Signalen, die gemäss einem Lauflängecode auf einem Aufzeichnungsträger, beispielsweise einem Magnetband 2 aufgezeichnet sind.

Es ist klar, dass auch andere Aufzeichnungsträger, wie Platten, Speicher usw. verwendet werden können. Im Falle eines Magnetbandes 2 ist als Lesegerät ein Wiedergabekopf 3 vorgesehen, an dem das Magnetband 2 in an sich bekannter Weise vorbeibewegt wird. Dem Wiedergabekopf 3 ist in an sich bekannter Weise ein Spannungswandler und Verstärker 4 und beispielsweise ein Integrator 5 vorgeschaltet. Ist ein Integrator 5 vorgeschaltet, so ergeben sich Signale 34 bis 39 gemäss Fig. 3. Statt einem Integrator 5 kann auch ein Differentiator vorgesehen werden. Dann ergeben sich Signale 46 bis 51 gemäss Figur 5. Ohne Integrator 5 oder Differentiator ergeben sich Signale 40 bis 45 gemäss Fig. 4.

Auf den Integrator oder Differentiator 5 folgt ein Nullstellendetektor 56, der die Nulldurchgänge der Signale 34 bis 39 oder 46 bis 51 erfasst und an einen Zähler 57 weitergibt, der durch Zwischensignale, die durch die Nulldurchgänge erzeugt werden, gestartet und gestoppt wird. Am Ausgang 58 des Zählers 57 steht somit ein Signal zur Verfügung, das den Lauflängen $r'_i$ entspricht. Solche Elemente wie Integrator oder Differentiator 5, Verstärker 4, Nullstellendetektor 56 oder Zähler 57 sind an sich bekannt und deshalb hier nicht näher beschrieben. Dasselbe gilt für deren Betrieb in einer solchen Anordnung.

Auf den Ausgang 58 folgen eine wählbare Anzahl Register 59, 60 für einzelne Werte von Lauflängen $r'_{i+2}$, $r'_{i+1}$ wie sie am Ausgang 58 erschienen. Wie der Ausgang 58, so sind auch Ausgänge 61 und 62 der Register 59, 60 über Qauntisierer 63, 64 und 65 mit einem Festwertspeicher 66 (ROM) verbunden.

Die Quantisierer 63, 64 und 65 sind an Eingänge 67, 68 und 69 des Festwertspeichers 66 angeschlossen. Ein Ausgang 70 des Festwertspeichers 66, sowie der Ausgang 62 des letzten Registers 60 sind an einen Summator 6 angeschlossen.

Auf den Summator 6 folgen weitere Festwertspeicher 7 und 8. Im Speicher 7 sind Signalabweichungen $dr_i$, im Speicher 8 die möglichen Ausgangssignale $r_i$, $r_{i+1}$, $r_{i+2}$, $r_{i-1}$, $r_{i-2}$ gespeichert. Daran anschliessend sind weitere Register 9, 10 für ein einzelne Ausgangssignale $r_{i-1}$, $r_{i-2}$ usw. vorgesehen. Dabei sind Ausgänge 12, 13 der Register 8, 9 und 14 des Speichers 8 über Leitungen 15, 16, 17 mit einem Festwertspeicher 18 (ROM) verbunden.

Im Festwertspeicher 18 sind weitere Signalabweichungen $dr_i$ gespeichert. Eine Ausgangsleitung 19 des Speichers 18 ist an den Summator 6 angeschlossen. Zwischen dem Speicher 8 und dem Register 9 ist an den Ausgang 14 eine Leitung 20 angeschlossen, welche die Ausgangssignale $r_i$ ableitet. Diese mündet üblicherweise in eine Dekodiereinheit 21.

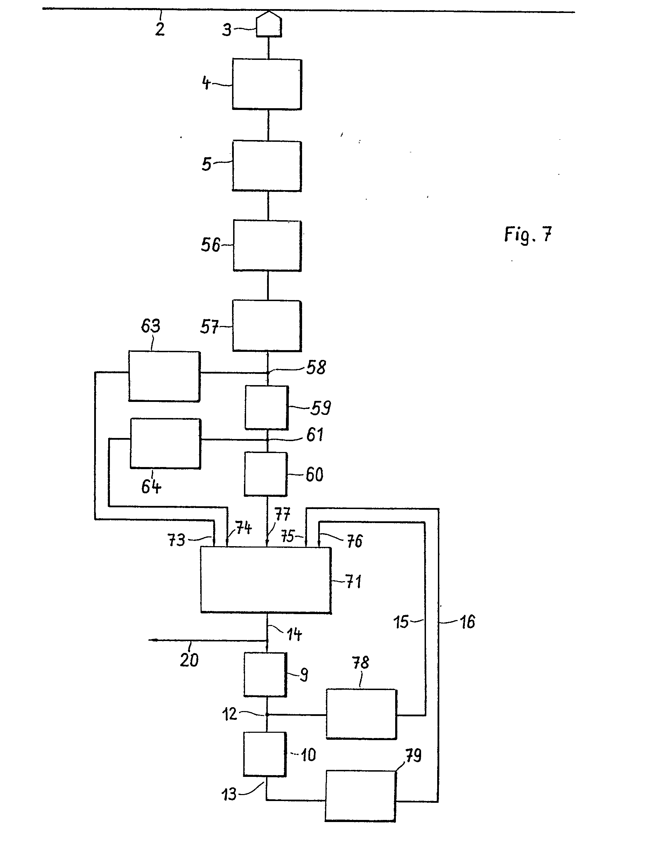

In Figur 7 ist eine Vorrichtung wie in Figur 6 dargestellt, bei welcher der Summator 6 und die Festwertspeicher 7 und 8 zu einer Einheit 71 zusammengefasst sind. Die übrigen Elemente dieser Vorrichtung sind identisch und weisen deshalb dieselben Bezugsziffern auf.

Diese Einheit 71 besteht wiederum in bekannter Weise aus einem Festwertspeicher (ROM) in dem nun sämtliche Signalabweichungen gespeichert sind. Die Einheit 71 weist beispielsweise Eingänge 73, 74 für nachfolgende Lauflängen, Eingänge 75, 76 für vorausgehende Lauflängen und einen Eingang 77 für die aktuelle Lauflänge auf. Wie in der Ausführung gemäss Figur 6 ist nur ein Ausgang 14 mit daran angeschlossener Leitung 20 vorgesehen. Am Ausgang 14 erscheinen korrigierte Lauflängen $r_i$.

Aus Figur 7 ist weiter ersichtlich, dass auch in die Leitungen 15 und 16 je ein Quantisierer 78, 79 eingeschaltet sein kann, der genau dieselbe Aufgabe erfüllt wie die Quantisierer 63, 64.

Die Wiedergabe von digitalisierten Daten oder Signalen hat beispielsweise zur Voraussetzung, dass diese Daten oder Signale vorausgehend auf einem Informationsträger aufgezeichnet werden. Dazu ist es notwendig, dass die Daten oder Signale in demselben Code aufgezeichnet werden, für dessen Decodierung die Decodiereinheit 21 programmiert ist. Die an sich bekannte, aber hier nicht näher gezeigte, Codiereinheit in der Aufzeichnungselektronik des Wiedergabegerätes oder eines separaten Aufzeichnungsgerätes wandelt die digitalen Daten oder Signale ausgehend von einer Form gemäss Figur 1 in eine Form gemäss Figur 2.

Dieses Signal 1 wird beispielsweise auf dem Magnetband 2 gespeichert und zwar als Magnetisierung die zwischen zwei Magnetisierungszuständen wechselt.

Bei der Wiedergabe werden die Signale am Ausgang 58, einerseits dem Register 59 und andererseits dem Quantisierer 63 zugeleitet. Im Register 59 wird beispielsweise die zuletzt vom Zähler 57 gezählte Lauflänge $r'_{i+2}$ gespeichert und zwar solange, bis der Zähler 57 einen neuen Wert $r'_{i+3}$ für eine Lauflänge ausgibt. Dann wird der Wert $r'_{i+2}$ einerseits in das nächste Register 60 und andererseits in den Quantisierer 64 eingegeben usw.

In den Quantisierern 63, 64 und 65 werden den Werten der Lauflängen, beispielsweise $r'_{i+2}$, $r'_{i+1}$ und $r'_i$ neue Werte (beispielsweise ganzzahlige Werte) $r''_{i+2}$, $r''_{i+1}$, $r''_i$ zugeordnet, die anschliessend über die Eingänge 67, 68 und 69 in den Festwertspeicher 66 eingegeben werden.

Im Festwertspeicher 66 werden Werten $r'_{i+2}$, $r'_{i+1}$, $r'_i$ oder $r''_{i+2}$, $r''_{i+1}$, $r''_i$ Werte von Signalabweichungen $dr_{i+2}$, $dr_{i+1}$, $dr_i$ zugeordnet. Solche Signalabweichungen $dr_{i+2}$, $dr_{i+1}$, $dr_i$ sind als Funktion der möglichen Werte für Lauflängen $r'_{i+2}$, $r'_{i+1}$, $r'_i$ oder $r''_{i+2}$, $r''_{i+1}$, $r''_i$ im Festwertspeicher 66 gespeichert.

Immer, wenn am Ausgang 62 ein neuer Wert für eine Lauflänge $r'_{i+2}$, $r'_{i+1}$, $r'_i$ erscheint, erscheint auch am Ausgang 70 des Festwertspeichers 66 ein Wert $dr_{i+2}$, $dr_{i+1}$, $dr_i$. Die Werte für die Lauflängen $r'_{i+2}$, $r'_{i+1}$, $r'_i$ und die Werte der Signalabweichungen $dr_{i+2}$, $dr_{i+1}$, $dr_i$ werden dem Summator 6 zugeführt, wo sie mit weiteren Werten für Signalabweichungen $dr_{i-1}$, $dr_{i-2}$, aus dem Festwertspeicher 18 summiert und zu einem Ausgangswert kombiniert werden, der dem Festwertspeicher 7 zugeführt wird.

Der Festwertsepicher 7 enthält Signalabweichungen $dr_i(r_i)$ die vom eigenen Signalabstand $r_i$ abhängen. Dadurch wird diejenige Signalabweichung berücksichtigt, die nur eine Funktion des eigenen Signalabstandes ist.

Da mögliche Signalabstände $r_i$ in der Praxis nur eine bestimmte Anzahl bestimmter Werte annehmen können, sind im Speicher 7 die diesen bestimmten Signalabständen zugehörigen und von diesen abhängigen Werte der Signalabweichungen gespeichert. Für diesen Speicher 7 können somit Eingangswerte $r'_i$ oder die Ausgangswerte $r_i$ über Leitung 24 oder 72 als Adressen für die Speicherplätze herangezogen werden. Für den Festwertspeicher 8, in dem die möglichen beispielsweise ganzzahligen Ausgangswerte $r_i$ der Signalabstände gespeichert sind, werden als Adressen die den Speicher 7 über Leitung 25 verlassenden Signalabstände verwendet.

Im Festwertspeicher 8 wird der Signalabstand $r'_i$ um die Signalabweichung $dr_i(noise)$ korrigiert. Die Ausgangswerte der Signalabstände $r_i$ verlassen den Festwertspeicher 8 über den Ausgang 14. Von dort aus gelangen die Werte der Signalabstände $r_i$ einerseits in die Dekodiereinheit 21 und andererseits in das Register 9. Die Register 9, 10 können jeweils nur einen einzigen Wert für einen Signalabstand aufnehmen. Sie sind so geschaltet, dass jeder Wert eines Signalabstandes $r_i$ zuerst in das Register 9, dann in das Register 10 gelangt. Von den Ausgängen 12 und 13 der Register 9 und 10 werden die Werte der Signalabstände $r_{i-1}$, $r_{i-2}$, $r_{i-3}$ taktweise dem Festwertspeicher 18 über Leitungen 15 und 16 übermittelt, wo sie als Adressen verwendet werden. Die Anzahl der Register 9, 10 richtet sich nach der Anzahl der Werte $r_{i-1}$, $r_{i-2}$, ... $r_{i-n}$, die für die Ermittlung der Signalabweichungen herangezogen werden sollen.

Im Festwertspeicher 18 sind Signalabweichungen $dr_i$ gespeichert, und zwar jeweils in Funktion vorausgehender Signalabstände $r_{i-1}$, $r_{i-2}$, $r_{i-3}$ usw. je nach Anzahl der Register 9, 10 usw.

Die als Adressen im Speicher 18 eingelesenen Signalabstände $r_{i-1}$, $r_{i-2}$, $r_{i-3}$ bezeichnen Speicherplätze, die entsprechende Signalabweichungen $dr_{i-1}$, $dr_{i-2}$, $dr_{i-3}$ enthalten.

Vor der Ausgabe werden sie im Speicher 18 noch summiert und werden als Signalabweichungen $dr(r_{i-1}, r_{i-2}, r_{i-3})$ über Leitung 19 dem Summator 6 zugeführt. Dort werden sie mit dem entsprechenden Signalabstand $r'_i$ summiert und die Summe in bekannter Weise durch die Festwertspeicher 7 und 8 gesandt.

In der Vorrichtung gemäss Figur 6 werden Lauflängen wie sie aus Figur 3 oder 5 bekannt sind und am Ausgang 58 (Fig. 6) auftreten gemäss der folgenden Formel zu Lauflängen $r_i$ korrigiert:

$$r_i = r'_i - dr_i(noise) - dr_i(r'_{i+1}, r'_{i+2} \ldots r'_{i+m}) - dr_i(r'_i) - dr_i(r'_{i-1}, r'_{i-2}, \ldots r'_{i-n})$$

wobei

$r_i$ die gesuchte Lauflänge,

$r'_i$ die eingegebene fehlerhafte Lauflänge,

$dr_i(noise)$ eine Signalabweichung bedeutet, wie sie in Elementen erzeugt wird, die Rauschen verursachen und/oder durch die Messung der Lauflänge mit endlicher Auflösung entsteht;

$dr_i(r_i)$ eine Signalabweichung bedeutet, die von der Länge des Signalabstandes $r_i$ oder $r'_i$ abhängt,

$dr_i(r_{i-1}, r_{i-2}, \ldots r_{i-n})$ eine Signalabweichung bedeutet, die von der Länge der vorausgehenden Lauflängen $r_{i-1}$, $r_{i-2}$ usw. beeinflusst ist.

$dr_i(r_{i+1}, r_{i+2}, \ldots r_{i+m})$ eine Signalabweichung bedeutet, die von der Länge der nach folgenden Lauflängen $r_{i+1}, r_{i+2}$ usw. beeinflusst ist.

Diesem Ansatz liegt die Erkenntnis zugrunde, dass ein Signalabstand oder eine Lauflänge von der unmittelbar vorausgehenden Lauflänge beeinflusst wird, dass insbesondere lange Lauflängen infolge der ungenügenden Wiedergabe der niederfrequenten Anteile eine zusätzliche Veränderung erfahren, dass Rauschen und Messung mit endlicher Auflösung auf jeden Fall eine Änderung der Signalabstände bewirken kann, dass jedoch schliesslich bei nicht allzu kritischen Übertragungskanälen die Lauflängen in erster grober Näherung den ursprünglichen Lauflängen gleich sind und dass bei bestimmten physikalischen Wiedergabesystemen eine Beeinflussung durchzukünftige, jedoch sich bereits in der Nähe des Wiedergabesystems befindliche Signale beobachtet werden kann.

Das bedeutet, dass am Ausgang 58 eintreffende Lauflängen anschliessend in den Registern 59, 60, 9, 10 verzögert werden und parallel dazu Signalabweichungen ermittelt werden und dass nach einer ersten Verzögerungszeit, wenn die Lauflänge den Ausgang 62 erreicht hat, dieser sowohl Signalabweichungen von wenig oder unverzögerten (zukünftigen) Lauflängen als auch Signalabweichungen von stärker verzögerten (alten) Lauflängen beigegeben werden.

In den Festwertspeichern 7, 18 und 66 sind zu allen vorkommenden diskreten Lauflängen $r_i$ Signalabweichungen $dr_i$ gespeichert. Wahlweise können darüberhinaus auch alle diejenigen Signalabweichungen $dr_i(r_{i-1}, r_{i-2}, \ldots r_{i-n})$ oder $dr_i(r_{i+1}, r_{i+2}, \ldots r_{i+m})$ vorgesehen sein, die durch Kombinationen zweier, dreier oder mehrerer aufeinanderfolgender Lauflängen entstehen können. Diese Kombinationen tragen der gegenseitigen Beeinflussung der Verzerrung aufeinanderfolgender Signale Rechnung.

Variationen der Vorrichtung gemäss Fig. 6 können darin bestehen, dass auch in die Leitungen 15 und 16 Quantisierer eingesetzt werden oder dass die Quantisierer 63, 64, 65 weggelassen werden. Da der Quantisierer 65 mit dem Eingang 69 sowie die Leitung 17 zur Ermittlung von Signalabweichungen $dr_i$ als Funktion der gesuchten eigenen Lauflänge $r_i$ dienen, kann auf diese Elemente, oder auf den Speicher 7 der demselben Zweck dient, wahlweise verzichtet werden. Die Quantisierer 63, 64, 65, die Festwertspeicher 66, 18, 7, 8 und die zum Speichern eines einzigen Wertes einer Lauflänge vorgesehenen Register 59, 60, 9, 10 bestehen, wie auch der Summator 6 aus an sich bekannten und deshalb hier nicht näher dargestellten Elementen. Ebenso ist es für den Durchschnittsfachmann klar, dass die ganze Vorrichtung durch vorgegebene, in einem nicht näher dargestellten Speicher gespeicherte Instruktionen in einem bestimmten Arbeitstakt gesteuert wird. Dieser Arbeitstakt hängt von der Frequenz der Ein- bzw. Ausgangssignale ab.

Die Quantisierer 63, 64, 65 und 78, 79 sind zum Beispiel als Festwertspeicher (ROM) ausgebildet und erlauben eine Verringerung des Informationsflusses. Beispielsweise verwandeln sie mit 7 Bit eintreffende Informationen in Ausgangsinformationen zu 2 oder 3 Bit.

Die Quantisierer 63, 64, 65, 78, 79 sind aber auch in die programmierbaren Speicher 66, 18 integrierbar. Als Register 9, 10, 59, 60 können beispielsweise bekannte Flip-Flop-Schaltungen verwendet werden.

Die Messung der Signalabstände im Zähler 57 kann mit einer Messfrequenz erfolgen, die von der Geschwindigkeit abhängt, mit welcher ein Informationsträger bewegt wird, während die Informationen davon abgelesen werden. Besteht ein Informationsträger beispielsweise aus einem Magnetband 2, so kann die Messfrequenz mit der Geschwindigkeit gekoppelt werden, mit welcher das Magnetband 2 am Wiedergabekopf 3 vorbei bewegt wird. Allerdings müssen auch die Signalabweichungen $dr_i$ die in den Festwertspeichern 7, 18 und 66 in Abhängigkeit von den Signalabständen $r_i$, $r_{i+1}$, $r_{i-1}$ usw. gespeichert sind, angepasst werden. Das heisst, es gibt eine Zuordnung neuer Werte $dr_i$ zu bekannten Werten $r_i$, $r_{i+1}$, $r_{i-1}$ usw.

Die Signalabweichungen $dr_i(r_i)$ können beispielsweise durch Testläufe ermittelt werden. Dabei wird beobachtet, wie ein bestimmtes Signal mit einem bekannten Signalabstand, das in eine Aufnahmevorrichtung eingegeben wird, am Ausgang 58 (Fig. 6) erscheint. Durch Vergleich des bekannten Signalabstandes $r_i$ am Eingang einer Aufnahmevorrichtung und des Signalabstandes $r'_i$ am Ausgang 58 lässt sich die Signalabweichung $dr_i(r_i)$ für den betreffenden Signalabstand $r_i$ ermitteln. Dies kann für die vorgesehenen Werte von $r_i$ durchgeführt werden.

Dasselbe Verfahren kann mit einer Signalfolge durchgeführt werden, um die Signalabweichungen $dr_i(r_{i-1}, r_{i-2}, \ldots r_{i-n}, r_{i+1}, \ldots r_{i+m})$ zu ermitteln. Dabei wird die Signalabweichung $dr_i$ bestimmt, wenn die vorausgehenden und nachfolgenden Signalabstände $r_{i-1}$, $r_{i+1}$, $r_{i-n}$, $r_{i+m}$ bekannt sind. Da der Einfluss des betreffenden eigenen Signalabstandes bekannt ist, lassen sich die Signalabweichungen $dr_i(r_i)$ und $dr_i(r_{i-1}, r_{i-2}, \ldots r_{i-n})$ oder $dr_i(r_{i+1}, r_{i+2}, \ldots r_{i+m})$ auseinanderhalten und separat im Speicher 7 und den Speichern 18 und 66 speichern.

Sind die Elemente bekannt, die ein Signal durchlaufen, muss um die Signalabweichungen zu bewirken, so können die Signalabweichungen auch berechnet werden.

Die über Leitung 20 übermittelten Signalabstände $r_i$ können zusätzlich auch Träger bestimmter Signalmuster sein.

Solche Signalmuster können beispielsweise aus einer bestimmten Folge bestimmter Signalabstände $r_i$ bestehen. Das Erfassen solcher Signalmuster geschieht in einer Vorrichtung zum Lesen von Signalmustern auf an sich bekannte Art, und deshalb hier nicht näher beschriebene Art.

Die Decodiereinheit 21 kann ferner so ausgebildet werden, dass die Umsetzung der Signalabstände in 0 oder 1-wertige Bit jeweils für den ganzen Signalabstand zusammen erfolgt. Dies ist möglich, weil ein Signalabstand jeweils nur 0-wertige oder nur 1-wertige Bit umfasst. Eine Umsetzung für jede Bitzelle einzeln erübrigt sich somit. Die so ausgebildete Decodiereinheit 21 arbeitet auf diese Weise langsamer als bei Umsetzung für jede Bitzelle einzeln.

Dieselbe Wirkungsweise ergibt sich für die Vorrichtung gemäss Figur 7.

Die Erfindung ist hier nur am Beispiel eines Wiedergabegerätes für aufgezeichnete Signale erläutert. Sie kann aber überall dort auch angewendet werden, wo digitale Daten anfallen, die infolge nicht idealer vorausgehender Übertragung verzerrt sind. Ebenso ist die Erfindung geeignet digitale Signale wiederzugeben, die nicht gemäss einem Lauflängencode codiert sind.

**Patentansprüche**

1. Verfahren zur Wiedergabe von digitalisierten Signalen, die als binäre Signale in Form von Pulsen übertragen werden, dadurch gekennzeichnet, dass Signalabweichungen ($dr_i$) ermittelt werden, die Abweichungen der Länge der ursprünglichen Pulse als Folge von Verzerrungen be der Übertragung angeben, dass die Signalabweichungen ($dr_i$) in Speichern (7, 18, 66) gespeichert werden, und dass eine direkte Verarbeitung von Eingangssignalen (r') zu Ausgangssignalen (r) durch Summierung der Eingangssignale (r') mit den gespeicherten Signalabweichungen (dr) durchgeführt wird.

2. Verfahren gemäss Anspruch 1, dadurch gekennzeichnet, dass eine Signalabweichung ($dr_i$) zu einem Ausgangssignal ($r_i$) in Abhängigkeit des betreffenden Ausgangssignals ($r_i$) ermittelt wird und dass weitere Signalabweichungen ($dr_{i-1}$, $dr_{i-n}$) zu demselben Ausgangssignal ($r_i$) in Abhängigkeit eines oder mehrerer vorausgehender Ausgangssignale ($r_{i-1}$ ... $r_{i-n}$) ermittelt werden.

3. Verfahren gemäss Anspruch 1, dadurch gekennzeichnet, dass eine Signalabweichung ($dr_i$) zu einem Ausgangssignal ($r_i$) in Abhängigkeit des betreffenden Ausgangssignals ($r_i$) ermittelt wird und dass weitere Signalabweichungen ($dr_{i+1}$, $dr_{i+2}$, ... $dr_{i+m}$) zu demselben Ausgangssignal ($r_i$) in Abhängigkeit eines oder mehrerer nachfolgender Ausgangssignale ($r_{i+1}$, $r_{i+2}$, ... $r_{i+m}$) ermittelt werden.

4. Verfahren gemäss Anspruch 1, dadurch gekennzeichnet, dass die Ausgangssignale ($r_i$) mit einer Messfrequenz gemessen und anschliessend quantisiert werden.

5. Verfahren gemäss Anspruch 1, dadurch gekennzeichnet, dass eine anschliessende Dekodierung mit Hilfe einer Messfrequenz erfolgt, die von der Geschwindigkeit abhängt, mit welcher der Informationsträger (2) relativ zu einem Lesegerät (3) bewegt wird.

6. Verfahren gemäss Anspruch 1, dadurch gekennzeichnet, dass die Signalabweichungen (dr) durch Messung ermittelt werden.

7. Verfahren gemäss Anspruch 1, dadurch gekennzeichnet dass die Signalabweichungen (dr) durch Berechnung ermittelt werden.

8. Verfahren gemäss Anspruch 1, dadurch gekennzeichnet, dass aus den Ausgangssignalen ($r_i$) Signalmuster herausgelesen werden, die der Synchronisierung von beliebigen Funktionen dienen.

9. Verfahren gemäss Anspruch 1, dadurch gekennzeichnet, dass die Dekodierung durch direkte Umsetzung aller Bitzellen einer Lauflänge gemeinsam in eine Folge von Bit-Signalen erfolgt.

10. Vorrichtung zur Wiedergabe von digitalisierten Signalen, die als binäre Signale in Form von Pulsen übertragen werden, gekennzeichnet durch eine Anzahl Register (9, 10, 59, 60) für eine entsprechende Anzahl Ausgangssignale ($r_{i-1}$, $r_{i-2}$, $r_{i+1}$, $r_{i+2}$) durch Speicher (7, 18, 66) für Signalabweichungen (dr), die Abweichungen der Länge der ursprünglichen Pulse als Folge von Verzerrungen bei der Übertragung angeben, sowie durch eine Einheit (6, 71) zum Summieren der Eingangssignale ($r'_i$) mit den Signalabweichungen (dr).

11. Vorrichtung gemäss Anspruch 10, dadurch gekennzeichnet, dass die Einheit (6) den Registern (9, 10) für vorausgehende Ausgangssignale ($r_i$) vorgeschaltet und den Registern (59, 60) für nachfolgende Ausgangssignale nachgeschaltet ist.

12. Vorrichtung gemäss Anspruch 10, dadurch gekennzeichnet, dass der Einheit (6, 71) eine Decodiereinheit (21) nachgeschaltet ist.

**Revendications**

1. Méthode pour reproduire des signaux digitalisés transmis comme signaux binaires sous forme d'impulsions, caractérisés en ce que des écarts ($dr_i$) sont établis, qui indiquent les écarts de la longueur des impulsions originales dus aux distorsions causées par la transmission, en ce que ces écarts ($dr_i$) sont mémorisés dans des mémoires (7, 18, 66) et en ce que le traitement des signaux d'entrée (r') en signaux de sortie (r) se fait directement en additionnant les écarts (dr) mémorisés aux signaux d'entrée (r').

2. Méthode selon la revendication 1, caractérisée en ce que un écart ($dr_i$) se rapportant à un signal de sortie ($r_i$) est établi en fonction de ce propre signal de sortie ($r_i$) et en ce que d'autres écarts ($dr_{i-1}$, $dr_{i-n}$) se rapportant au même signal de sortie ($r_i$) sont établis en fonction d'un ou de plusieurs signaux de sortie ($r_{i-1}$, ... $r_{i-n}$) précédents.

3. Méthode selon la revendication 1, caractérisée en ce que un écart ($dr_i$) se rapportant à un signal de sortie ($r_i$) est établi en fonction du propre signal de sortie ($r_i$) et en ce que d'autres écarts ($dr_{i+1}$, $dr_{i+2}$, ..., $dr_{i+m}$) se rapportant au même signal de sortie ($r_i$) sont établis en fonction d'un ou de plusieurs signaux de sortie ($r_{i+1}$, $r_{i+2}$, ..., $r_{i+m}$) succédants.

4. Méthode selon la revendication 1, caractérisée en ce que les signaux de sortie ($r_i$) sont mesurés par une fréquence de mesure et en ce que ces signaux sont ensuite quantifiés.

5. Méthode selon la revendication 1, caractérisée en ce que en suite un décodage est fait à l'aide d'une fréquence de mesure qui dépend de la vitesse avec laquelle le support d'informations (2) défile par rapport à un dispositif de lecture (3).

6. Méthode selon la revendication 1, caractérisée en ce que les écarts (dr) sont établis par une opération de mesure.

7.Méthode selon la revendication 1, caractérisée en ce que les 1 écarts (dr) sont établis par une opération de calcul.

8. Méthode selon la revendication 1, caractérisée en ce que des dessins qui servent à la synchronisation de différentes fonctions sont extraits des signaux de sortie ($r_i$).

9. Méthode selon la revendication 1, caractérisée en ce que le décodage est fait en transformant ensemble en une série de signaux le contenu de toutes les cellules qui per contiennent un bit appartenant à une même longueur d'impulsion.

10. Appareil pour reproduire des signaux digitalisés transmis comme signaux binaires sous forme d'impulsions, caractérisé par un nombre de registres (9, 10, 59, 60) pour un nombre correspondant de signaux de sortie ($r_{i-1}$, $r_{i-2}$, $r_{i+1}$, $r_{i+2}$), par des mémoires (7, 18, 66) pour des écarts (dr) qui indiquent les écarts de longueur des impulsions originales dus aux distorsions causées par la transmission, et par une unité (6, 71) destinée à l'addition des signaux d'entrée ($r'_i$) et des écarts (dr).

11. Appareil selon la revendication 10, caractérisé par le fait que l'unité (6) précède les registres (9, 10) destinés aux signaux de sortie ($r_i$) précédents et suit les registres (59, 60) destinés aux signaux de sortie succédants.

12. Appareil selon la revendication 10, caractérisé par le fait qu'un décodeur (21) suit l'unité (6).

**Claims**

1. Method for reproducing digitized signals, which are transmitted as binary signals in the form of pulses, characterized in that signal deviations ($dr_i$) are determined, giving the deviations from the length of the original pulse as a consequence of distortions during transmission, that the signal deviations ($dr_i$) are stored in memories (7, 18, 66) and that there is a direct processing of input signals ($r'$) to output signals ($r$) by summing the input singals ($r'$) with the stored signal deviations (dr).

2. Method according to claim 1, characterized in that a signal deviation ($dr_i$) to an output signal ($r_i$) is detected as a function of the particular output signal ($r_i$) and that further signal deviations ($dr_{i-1}$, $dr_{i-n}$) to the same output signal ($r_i$) are detected as a function of one or more preceding output signals ($r_{i-1}$ ... $r_{i-n}$).

3. Method according to claim 1, characterized in that a signal deviation ($dr_i$) to an output signal ($r_i$) is detected as a function of the particular output signal ($r_i$) and that further signal deviations ($dr_{i+1}$, $dr_{i+2}$, ... $dr_{i+m}$) to the same output signal ($r_i$) are detected as a function of one or more following output signals ($r_{i+1}$, $r_{i+2}$), ...$r_{i+m}$).

4. Method according to claim 1, characterized in that the output signal ($r_i$) are measured with a measuring frequency and subsequently quantized.

5. Method according to claim 1, characterized in that subsequent decoding takes place with the aid of a measuring frequency, which is a function of the speed with which the information carrier (2) moves relative to a reading device (3).

6. Method according to claim 1, characterized in that the signal deviations (dr) are determined by measurement.

7. Method according to claim 1, characterized in that the signal deviations (dr) are determined by calculation.

8. Method according to claim 1, characterized in that signal patterns are read out from the output signals ($r_i$) and are used for synchronizing random functions.

9. Method according to claim 1, characterized in that decoding takes place by directly converting all bit cells of a run length together into a sequence of bit signals.

10. Apparatus for reproducing digitized signals transmitted as binary signals in the form of pulses, characterized by a plurality of registers (9, 10, 59, 60) for a corresponding number of output signals ($r_{i-1}$, $r_{i-2}$, $r_{i+1}$, $r_{i+2}$) by memories (7, 18, 66) for the signal deviations (dr), giving the deviations from the length of the original pulses as a consequence of distortions during transmission, as well as by a unit (6, 71) for summing the input signals ($r'_i$) with the signal deviations (dr).

11. Apparatus according to claim 10, characterized in that the unit (6) is connected upstream of the registers (9, 10) for the preceding output signals ($r_i$) and is connected downstream of the registers (59, 60) for the following output signals.

12. Apparatus according to claim 10, characterized in that the unit (6, 71) is followed by a decoding unit (21).

1/3

Fig.1

0  0  1  1  1  1  1  0  0  0  0  1  1  1  0  0  1  0  0

Fig.2

Fig. 3

Fig.4

Fig.5

9

2/3

Fig. 6

3/3

Fig. 7

13